# EUROPÄISCHE PATENTSCHRIFT

(11) **EP 0 964 801 B1**
(45) Veröffentlichungstag und Bekanntmachung des Hinweises auf die Patenterteilung: **30.10.2002**
(21) Anmeldenummer: 98921386.3
(22) Anmeldetag: 06.03.1998
(51) Int. Cl.: B60R 16/02, H02H 9/00, H02J 7/14, H02P 9/48

(54) **ANTRIEBSSYSTEME, INSBESONDERE FÜR EIN KRAFTFAHRZEUG, UND VERFAHREN ZUM BETREIBEN SOLCHER ANTRIEBSSYSTEME**
PROPULSION SYSTEMS, ESPECIALLY FOR A MOTOR VEHICLE, AND METHODS FOR OPERATING SAID PROPULSION SYSTEMS
SYSTEMES DE TRANSMISSION DESTINES NOTAMMENT A UN VEHICULE AUTOMOBILE ET MODE DE FONCTIONNEMENT DE TELS SYSTEMES DE TRANSMISSION

(30) Priorität: 06.03.1997 DE 19709135
(43) Veröffentlichungstag der Anmeldung: 22.12.1999
(73) Patentinhaber: Continental ISAD Electronic Systems GmbH & Co. oHG, 86899 Landsberg/Lech (DE)
(72) Erfinder: PELS, Thomas, D-77855 Achern (DE)
(74) Vertreter: Lippich, Wolfgang, Dipl.-Pys., Dr.rer.nat.
(86) Internationale Anmeldenummer: EP9801301
(87) Internationale Veröffentlichungsnummer: WO98039179

(56) Entgegenhaltungen:
- EP-A- 0 407 633
- EP-A- 0 680 139
- US-A- 5 119 014
- US-A- 5 228 305
- US-A- 5 561 363
- US-A- 5 710 465
- DATABASE WPI Section EI, Week 8025 Derwent Publications Ltd., London, GB; Class X13, AN 80-F5051C XP002074454 & SU 694 967 A (MOSC AVIATION INST)
- PATENT ABSTRACTS OF JAPAN vol. 011, no. 016 (M-554), 16. Januar 1987 & JP 61 191201 A (DIESEL KIKI CO LTD), 25. August 1986

## Beschreibung

Die Erfindung betrifft Antriebssysteme, insbesondere für ein Kraftfahrzeug.

Der Antriebsmotor eines Kraftfahrzeugs dient neben dem eigentlichen Fahrzeugantrieb auch dem Antrieb von Zusatzaggregaten sowie der Erzeugung elektrischer Energie mit Hilfe eines an den Antriebsmotor gekoppelten Generators. Die elektrische Energie wird für die Speisung von vielfältigen Verbrauchern mit zum Teil relativ hoher Leistungsaufnahme benötigt. Hierzu zählen insbesondere Heizungen, wie Scheiben-, Fahrgastraum-, Sitz- und Katalysatorheizungen, Klimakompressoren sowie Hochleistungsantriebe, z.B. für eine elektrisch betätigte Lenkung und elektrisch betätigte Bremsen. Im Leerlauf dient der Antriebsmotor nicht dem Fahrzeugantrieb. Er braucht vielmehr nur die für seine Eigendrehung aufzubringende Arbeit zu leisten und daneben mechanische Hilfsaggregate sowie den Generator anzutreiben. Um Kraftstoffverbrauch, Schadstoffausstoß und Geräuschentwicklung gering zu halten, wählt man die Leerlaufdrehzahl im allgemeinen möglichst niedrig, und zwar knapp über einer Mindestdrehzahl. Diese sollte auch kurzfristig nicht unterschritten werden, um sicherzustellen, daß der Motor nicht unruhig läuft oder stehen bleibt. In diesem Betriebszustand hat der Verbrennungsmotor nur sehr geringe Leistungsreserven.

Das Einschalten eines elektrischen Verbrauchers großer Leistung führt zu einem plötzlichen Spannungsabfall im Bordnetz (oder einem anderen Netz, über das der Verbraucher gespeist wird). Dies wiederum führt bei einem auf konstante Spannung geregelten Generator zu einem plötzlichen Anstieg des Erregerstroms, womit eine ebenso plötzliche Zunahme des vom Generator auf den Verbrennungsmotor ausgeübten Bremsmoments einhergeht. Dieses bedingt wiederum einen Abfall der Leerlaufdrehzahl des Verbrennungsmotors.

Eine herkömmliche Leerlaufdrehzahlregelung versucht einem solchen Abfall durch einen sog. Füllungseingriff und/oder einen Zündungseingriff entgegenzuwirken (siehe z.B. Kraftfahrtechnisches Handbuch/Bosch, 21. Auflage/1991, S.466). Beim Füllungseingriff wird beim Abfall der Drehzahl eine größere Kraftstoffmenge eingespritzt und hierdurch das vom Verbrennungsmotor aufgebrachte Drehmoment erhöht. Bei dieser Eingriffsart dauert es jedoch relativ lange, bis das erhöhte Drehmoment zur Verfügung steht. Die Regelung ist also träge. Beim Zündungseingriff wird dem Drehzahlabfall durch Verstellung des Zündzeitpunkts von "spät" auf "früh" entgegengewirkt, was ebenfalls zu einer Drehmomenterhöhung führt. Diese Eingriffsart ist wesentlich schneller, hat jedoch den Nachteil, daß der Verbrennungsmotor im Leerlauf permanent mit einem späten Zündzeitpunkt betrieben werden muß, um bei einem Drehzahlabfall genügend Spielraum für die Zündzeitpunktverstellung in Richtung "früh" zu haben. Obwohl beide Lösungen grundsätzlich funktionieren, sind sie nicht als optimal anzusehen. Um bei dem relativ trägen Füllungseingriff ein zwischenzeitliches Unterschreiten der Mindestdrehzahl zu vermeiden, muß nämlich i.a. die Leerlaufdrehzahl über der Mindestdrehzahl gewählt werden. Beim Zündungseingriff läuft der Verbrennungsmotor wegen der erforderlichen Spät-Einstellung des Zündzeitpunkts nur mit einem verminderten Wirkungsgrad. Beide Lösungen bedingen also einen im Vergleich zu konstanten Leerlaufbedingungen erhöhten Kraftstoffverbrauch und Schadstoffausstoß.

Aus EP 0 407 633 A1 ist ein Antriebssystem eines Kraftfahrzeugs mit einem Verbrennungsmotor bekannt. Es weist einen mit dem Verbrennungsmotor Antriebsmotor gekoppelten Generator auf, welcher der Speisung mehrerer elektrischen Verbraucher dient, außerdem ein ein Steuersystem, welches bei einer Zuschaltung eines oder mehrerer elektrischer Verbraucher bewirkt, daß der Verbrennungsmotor nur mit einem verlangsamt ansteigenden Bremsmoment durch den Generator beaufschlagt wird. Dies wird dadurch bewirkt, daß die Versorgungsspannung langsam ansteigend an die Verbraucher angelegt wird.

Die Erfindung hat sich zum Ziel gesetzt, ein verbessertes Antriebssystem dieser Art bereitzustellen.

Diese Aufgabe wird gemäß einem ersten Aspekt der Erfindung nach Anspruch 1 durch ein Antriebssystem, insbesondere eines Kraftfahrzeugs gelöst, welches folgendes umfaßt:
- einen Antriebsmotor, insbesondere einen Verbrennungsmotor;
- mindestens einen mit dem Antriebsmotor gekoppelten Generator, welcher der Speisung eines oder mehrerer elektrischen Verbraucher mit elektrischer Energie dient;
- einem Steuersystem, welches bei einer Zuschaltung eines oder mehrerer elektrischer Verbraucher bewirkt, daß der Verbrennungsmotor nur mit einem verlangsamt ansteigenden Bremsmoment durch den Generator beaufschlagt wird,
dadurch gekennzeichnet, daß der verlangsamte Anstieg des Bremsmoments dadurch erzielt wird, daß das Steuersystem die oder mehrere der zuzuschaltenden Verbraucher zeitlich nacheinander zuschaltet.

Gemäß einem zweiten Aspekt der Erfindung nach Anspruch 2 wird die Aufgabe gelöst durch ein Antriebssystem, insbesondere eines Kraftfahrzeugs, welches folgendes umfaßt:
- einen Antriebsmotor, insbesondere einen Verbrennungsmotor;
- mindestens einen mit dem Antriebsmotor gekoppelten Generator, welcher der Speisung eines oder mehrerer elektrischen Verbraucher mit elektrischer Energie dient;
- einem Steuersystem, welches bei einer Zuschaltung eines oder mehrerer elektrischer Verbraucher bewirkt, daß der Verbrennungsmotor nur mit einem verlangsamt ansteigenden Bremsmoment durch den Generator beaufschlagt wird,
dadurch gekennzeichnet, daß der verlangsamte Anstieg des Bremsmoments dadurch erzielt wird, daß der elektrische Verbraucher nach einem Einschaltkommando mit zeitlicher Verzögerung zugeschaltet wird, und der generator in dem Zeitintervall zwischen Einschaltkommando und Zuschaltung ein langsam ansteigendes Bremsmoment aufbringt, dessen Endwert im wesentlichen dem Bremsmoment nach Zuschaltung entspricht, wobei die in dem Zeitintervall erzeugte elektrische Energie einem Speicher oder einem anderen Verbraucher zugeführt wird.

Und zwar ist der Anstieg vorzugsweise derart verlangsamt, daß auch ein Verbrennungsmotor mit (träger) Füllungseingriff-Regelung ein entsprechend ansteigendes Antriebsmoment aufbringen kann, so daß im Ergebnis die Drehzahl des Verbrennungsmotors durch die Einschaltung praktisch nicht verringert wird. Es sei angemerkt, daß mit "Einschaltung" das Kommando zum Einschalten gemeint ist, das zum Beispiel durch Betätigen einer Einschalttaste oder durch eine Steuereinrichtung, z.B. einen Thermostaten, erzeugt werden kann. Der tatsächliche Arbeitsbeginn der Verbrauchers kann demgegenüber verzögert sein, er wird daher zur Unterscheidung von der Einschaltung als "Zuschaltung" bezeichnet. Ferner sei angemerkt, daß mit "Einschaltung" und "Zuschaltung" nicht etwa nur ein "Aus-Ein-Schaltvorgang", sondern auch jede Leistungsvergrößerung, also etwa der Übergang von einer kleineren auf eine größere Heizstufe bei einer elektrischen Heizung bezeichnet wird. Unter "verlangsamtem Anstieg" wird ein Anstieg des Bremsmoments verstanden, der als Funktion der Zeit weniger steil als der Anstieg ist, welcher sich bei einem direkten Zuschalten des (der) Verbraucher(s) ergäbe (z.B. durch einfaches Schließen eines Einschaltkontakts für den Leistungsstrom). Vorzugsweise ist der Anstieg so verlangsamt, daß das Bremsmoment nach 0,5-5 sec praktisch seinen neuen Endwert (d.h. z.B. wenigstens 97% hiervon) erreicht.

Während bekannte Vorschläge zur Verbesserung einer Leerlaufregelung darauf abzielen, bei einer plötzlichen Störgrößenänderung (hier Bremsmomentvergrößerung) möglichst schnell zu reagieren, um auf diese Weise die Abweichung vom Leerlaufdrehzahl-Sollwert möglichst gering zu halten, geht die Erfindung einen anderen Weg. Und zwar wird bei der Erfindung nicht der Regler schneller gemacht, sondern die Störgrößenänderung verlangsamt. Dies ermöglicht auch einer relativ trägen Regelung, die Abweichungen von der Solldrehzahl gering zu halten. Folglich kann bei der Erfindung eine relativ langsame Regelung verwendet werden, wie Füllungseingriff (ohne Zündungseingriff), wobei eine Erhöhung der Leerlaufdrehzahl über die Mindestdrehzahl nicht, erforderlich. Der Sollwert der Leerlaufdrehzahl kann vielmehr knapp oberhalb der Mindestdrehzahl gewählt werden.

Das nur verlangsamte Einsetzen des vollen Bremsmoments des Generators ist nicht nur im Leerlauf vorteilhaft, sondern auch in Antriebszuständen. Insbesondere im unteren Teillastbereich kann sich die plötzliche Zuschaltung leistungsstarker Verbraucher in einem störenden Drehmomenteinbruch bemerkbar machen. Bei dem erfindungsgemäßen Antriebssystem können solche plötzlichen Drehmomentabsenkungen vermieden werden.

Der verlangsamte Anstieg des Bremsmoments kann auf verschiedene Arten realisiert sein. Gemäß dem ersten Aspekt bewirkt das Steuersystem, daß bei einem gleichzeitigen Einschalten mehrerer Verbraucher diese - oder zumindest mehrere von ihnen - zeitlich nacheinander versetzt zugeschaltet werden. Es ergibt sich hierdurch eine stufenförmige Zunahme des (Gesamt-)Bremsmoments.

Bei einem Verbraucher, der aus mehreren parallel geschalteten Teilverbrauchern aufgebaut ist, kann die Zuschaltung durch zeitlich versetztes Einschalten der Teilverbraucher erfolgen. Beispielsweise können bei einer Scheibenheizung einzelne parallel geschaltete Heizdrähte einzeln schaltbar ausgebildet sein und nacheinander eingeschaltet werden.

Gemäß dem zweiten Aspekt besteht eine weitere Möglichkeit zur Erzielung eines langsam ansteigenden Bremsmoments darin, den Verbraucher zwar mit schlagartig ansteigender Leistung zuzuschalten, dies jedoch verzögert gegenüber dem Einschaltkommando zu tun. In dem Zeitintervall zwischen dem Einschaltkommando und der verzögerten Zuschaltung wird die elektrische Maschine dann so gesteuert, daß sie ein langsam ansteigendes Bremsmoment erzeugt, dessen Endwert dem Bremsmomentwert nach der plötzlichen Zuschaltung entspricht. Synchron mit dem Zuschalten des Verbrauchers wird die Speisung des anderen Verbrauchers schlagartig beendet. Die in diesem Zeitintervall erzeugte elektrische Energie wird beispielsweise einem Energiespeicher oder einem anderen Verbraucher zugeführt. Bei dem Energiespeicher kann es sich z.B. um einen elektrischen Speicher, etwa die herkömmliche Starterbatterie oder einen Kurzzeitspeicher, etwa eine Kondensatorbatterie, oder um einen Schwungmassenspeicher handeln. Der andere Verbraucher kann z.B. ein für diesen Zweck vorgesehener Heizwiderstand sein; ebenso kann ein ohnehin vorhandener Verbraucher wie z.B. eine Heckscheibenheizung, für diesen Zweck mitbenutzt werden.

Bei einer vorteilhaften Ausgestaltung ist der Verbrennungsmotor mit einer autonomen Leerlaufdrehzahlregelung ausgestattet, welche funktionell mit dem Steuersystem für die Steuerung des verlangsamten Bremsmomentanstiegs nicht - oder zumindest nicht direkt - gekoppelt ist. Eine indirekte Kopplung besteht dann nur darin, daß die Leerlaufdrehzahlregelung eine von dem zunehmenden Bremsmoment hervorgerufene (geringfügige) Drehzahlabsenkung detektiert und diesem Drehzahlabfall durch eine drehmomenterhöhende Maßnahme (z.B. einen Füllungseingriff) so entgegensteuert, daß die Drehzahlabsenkung vermindert oder nach einiger Zeit beseitigt wird (z.B. mit einem Regler mit P- bzw. PI-Charakteristik).

Diese autonome Regelung kann jedoch erst dann reagieren, wenn sich bereits ein detektierbarer Drehzahlabfall gezeigt hat. Eine andere vorteilhafte Ausgestaltung beruht deshalb darauf, daß das Steuersystem zur Steuerung des verlangsamten Bremsmomentanstiegs den Verbrennungsmotor aktiv dazu veranlaßt, ein entsprechend höheres Antriebsmoment aufzubringen, z.B. durch Füllungseingriff (Anspruch 3). Dies wird i.a. bereits geschehen, bevor sich irgendeine Drehzahlabsenkung bemerkbar macht. Eine solche Steuerung kann der üblichen Leerlaufdrehzahlregelung überlagert sein; es handelt sich dann um eine Regelung mit Vorsteuerung oder, genauer um eine störgrößenbeaufschaltete Regelung, wobei die Störgröße die momentane oder kurzfristig zu erwartende Leistungsaufnahme eines zugeschalteten oder zuzuschaltenden Verbrauchers darstellt.

Bei dem erfindungsgemäßen Antriebssystem wird zu einem bestimmten Zeitpunkt ein Einschaltkommando für einen bestimmten Verbraucher gegeben, welches z.B. vom Fahrzeugführer durch Betätigen einer entsprechenden Bedienungsteils (z.B. ein Knopf, Hebel, Pedal, etc.) erzeugt oder von einem Steuergerät automatisch generiert werden kann, z.B. von einem Thermostaten für eine Heizung. Das Steuersystem empfängt diese Einschaltkommandos, und sendet Zuschaltinformation an den Verbraucher. Die Zuschaltinformation steuert den Zeitpunkt der Zuschaltung und/oder den zeitlichen Verlauf der Leistungsaufnahme des Verbrauchers.

Grundsätzlich kann die Zuschaltinformation in Form des Spannungspegels der Versorgungsspannung vorliegen, wie dies herkömmlicherweise bei Kraftfahrzeugen der Fall ist. Beispielsweise bewirkt ein Versorgungsspannungspegel von 0 V, daß der Verbraucher keine Leistung aufnimmt, ein Anstieg der Versorgungsspannung auf 12 V führt zu einem entsprechenden Anstieg der Leistungsaufnahme des Verbrauchers. Allerdings bedingt eine solche Versorgungsspannungssteuerung ein sternartiges Versorgungsnetz (jeder einzeln zuschaltbare Verbraucher benötigt ein eigenes Speisekabel), was zu relativ schweren und dicken Kabelbäumen führt.

Vorteilhaft ist daher eine gemeinsame Speisung mehrerer oder aller einzeln zuschaltbarer Verbraucher. Die Speisespannung, oder zumindest ihr Gleichspannungsanteil, trägt dann keine Information darüber, welcher Verbraucher zu welchem Zeitpunkt zugeschaltet werden soll. Diese Steuerinformation kann beispielsweise über gesonderte Steuerleitungen zu den Verbrauchern geführt werden. Möglich ist, daß jeder einzeln zuschaltbare Verbraucher nach Art eines Sternnetzes mit einer eigenen Steuerleitung verbunden ist. Besonders vorteilhaft erfolgt die Steuerung des Zuschaltverhaltens der einzelnen Verbraucher über ein Bussystem (Anspruch 4), mit dem mehrere oder alle Verbraucher gekoppelt sind. Besonders vorteilhaft handelt es sich bei dem Bussystem aber um ein von dem Speisesystem gesondertes Datenbussystem, z.B. ein sog. CAN-Bussystem (CAN = Controller Area Network). Einzelne zuschaltbare Verbraucher sind hierbei mit einem eigenen Controller (d.h. einem Steuergerät) ausgerüstet, dem eine bestimmte Adresse zugewiesen ist. Die einzelnen Verbraucher werden über das gemeinsame Bussystem nacheinander durch kombinierte Adress/Befehlsworte angesprochen. Bei einer Abwandlung dient das Speisesystem gleichzeitig als Steuerbussystem. Hier ist der konstanten oder niederfrequenten Speisespannung die höherfrequente Steuerinformation (z.B. die Adress/-Befehlsworte) aufmoduliert.

Bei einer vorteilhaften Ausgestaltung ist das Steuersystem so ausgebildet, daß es bei einem besonders hohen Leistungsbedarf für den Antrieb des Fahrzeugs das Bremsmoment des Generators verringert oder vollständig aufhebt (Anspruch 5).

Bei dem erhöhten Leistungsbedarf kann es sich insbesondere um Beschleunigungsphasen des Kraftfahrzeugs handeln. Da bei modernen Kraftfahrzeugen der von den elektrischen Verbrauchern benötigte Leistungsanteil einen merklichen Anteil der Gesamtleistung des Verbrennungsmotors ausmachen kann, erlaubt diese Ausgestaltung eine kleinere Leistungsdimensionierung des Antriebsmotors bei insgesamt gleichbleibenden Fahrzeugbeschleunigungswerten. Abgesehen davon, daß ein solcher Antriebsmotor i.a. kostengünstiger herstellbar und ein geringeres Gewicht aufweist, wird er im Mittel über alle Betriebszustände bei höherer Leistung (bezogen auf seine Maximalleistung) betrieben, und damit in einem günstigeren Wirkungsgradbereich.

Die Verringerung des Bremsmoments kann beispielsweise dadurch erfolgen, daß der oder die Verbraucher abgeschaltet werden oder zumindest ihre Leistungsaufnahme verringert wird. Eine andere Möglichkeit besteht darin, den oder die Verbraucher während der Phase erhöhten Antriebsleistungsbedarfs nicht aus der elektrischen Maschine, sondern einem Energiespeicher, z.B. der Starterbatterie des Fahrzeugs zu speisen (Ansprüche 6 und 8). Um bei einer Speisung mehrerer Verbraucher aus dem Energiespeicher eine zu weitgehende Entladung des Speicher auszuschließen, werden vorteilhaft die verschiedenen Verbraucher in Abhängigkeit vom Ladezustand des Energiespeichers in einer Reihenfolge gemäß vorgegebener Verbraucherprioritäten teilweise oder ganz abgeschaltet (Anspruch 7).

Bei allen Ausgestaltungen und Aspekten der Erfindung ist als elektrische Maschine jede Rotationsmaschine geeignet, welche generatorisch betrieben werden kann. Es kann sich hierbei um einen herkömmlichen Generator handeln, der keine weiteren Funktionen übernimmt. Vorteilhaft dient die elektrische Maschine jedoch auch als Starter, so daß statt bisher zwei elektrischen Maschinen (Generator und Starter) nur noch eine (Starter/Generator) vorhanden ist. Die elektrische Maschine kann indirekt, etwa über Ritzel, Keilriemen, etc. mit der Verbrennungsmotorwelle gekoppelt sein. Vorteilhaft sitzt aber ein Teil der Maschine, insbesondere der Läufer, direkt auf der Motorwelle und ist ggf. drehfest mit ihr gekoppelt. Der Läufer kann beispielsweise auf der zum Getriebe führenden Welle sitzen oder an der anderen Seite des Verbrennungsmotors auf dem dort blind endenden Wellenstummel. Ein anderer Maschinenteil, insbesondere der Ständer ist drehfest mit einem nicht drehbaren Teil verbunden oder lösbar verbindbar, z.B. dem Motoroder Getriebegehäuse. Besonders vorteilhaft handelt es sich bei der elektrischen Maschine um eine Drehfeldmaschine, z.B. eine Asynchron- oder Synchronmaschine. Die Umwandlung des generatorisch erzeugten Wechselstroms (z.B. Dreiphasenstroms) kann z.B. mittels von der zu schaltenden Spannung gesteuerten Ventilen (z.B. Dioden) erfolgen. Ein besserer Wirkungsgrad ergibt sich mit Hilfe eines Umrichters, welcher mit Hilfe von durch gesonderte Steuergröße gesteuerten elektronischen Schaltern (z.B. Feldeffekttransistoren oder IGBT's), die für eine optimale Generatorwirkung erforderlichen Drehfelder mit Dreiphasenströmen frei einstellbarer Frequenz, Phase und Amplitude erzeugen.

Die Erfindung wird nun anhand von Ausführungsbeispielen und der angefügten schematischen Zeichnung näher erläutert. In der Zeichnung zeigen:
- Fig. 1a-2a: schematische Schaltpläne zur Veranschaulichung einer verlangsamten Zuschaltung eines oder mehrerer Verbraucher bei zwei verschiedenen Ausführungsformen;
- Fig. 1b-2b: schematische Diagramme des bei den Schaltungen gemäß Figuren 1a-2a jeweils erzeugten Bremsmoments als Funktion der Zeit;
- Fig. 3: eine Schemadarstellung der wichtigsten Funktionseinheiten des Antriebssystems;
- Fig. 4: ein Flußdiagramm eines Verfahrens zum Betreiben des Antriebssystems;
- Fig. 5: ein schematisches Diagramm, welches zur Veranschaulichung der Ausgestaltung gemäß Anspruch 5 das Antriebsmoment des Verbrennungsmotors und das Bremsmoment des Generators als Funktion der Zeit zeigt.

In den Figuren sind funktionsgleiche oder -ähnliche Teile mit gleichen Bezugszahlen bezeichnet.

Bei den gezeigten Ausführungsbeispielen ist eine mit einem Verbrennungsmotor gekoppelte elektrische Maschine vorgesehen, welche - da hier hauptsächlich die generatorische Funktion von Interesse ist - als Generator 1 bezeichnet wird. Sie dient dazu, einen oder mehrere elektrische Verbraucher 2 mit elektrischer Energie zu versorgen.

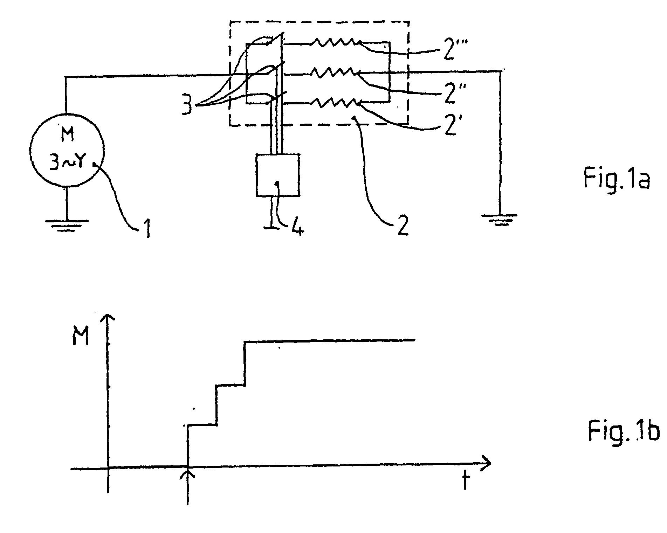

Bei dem Ausführungsbeispiel gemäß Fig. 1 handelt es sich um einen elektrischen Verbraucher 2, welcher aus mehreren parallel geschalteten Unterverbrauchern 2', 2'', 2''' aufgebaut ist. Die Unterverbraucher 2', 2'', 2''' können einzeln mit Hilfe von Schaltern 3 (bei denen es sich z.B. um elektronische oder elektromechanische Schalter handelt) zu- und abgeschaltet werden. Für die Steuerung der Schalter sorgt ein dem Verbraucher 2 zugeordneter Controller. Dieser erhält von einem (hier nicht dargestellten) übergeordneten Steuergerät ein Einschaltkommando, woraufhin er ein zeitlich nacheinander versetztes Einschalten der Unterverbraucher 2', 2'', 2''' veranlaßt, so daß die vom Generator 1 gelieferte Leistung und damit sein Bremsmoment gemäß Fig. 1b vom Zeitpunkt des Einschaltkommandos (durch einen Pfeil gekennzeichnet) näherungsweise treppenartig als Funktion der Zeit zunimmt. Bei anderen (nicht gezeigten Ausführungsformen) ist jedem der einzelnen Schalter 3 ein eigener Controller 4 zugeordnet. Das übergeordnete Steuergerät übernimmt dann die Steuerung der zeitlichen Abfolge der einzelnen Einschaltzeitpunkte, um den in Fig. 1b gezeigten zeitlichen Verlauf des Bremsmoments herbeizuführen.

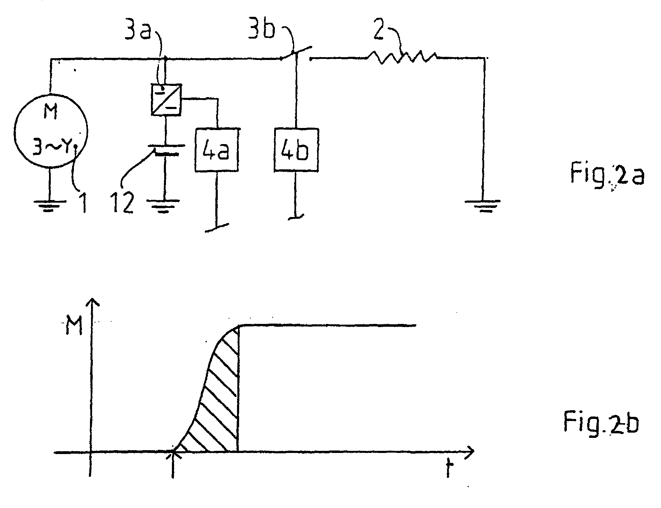

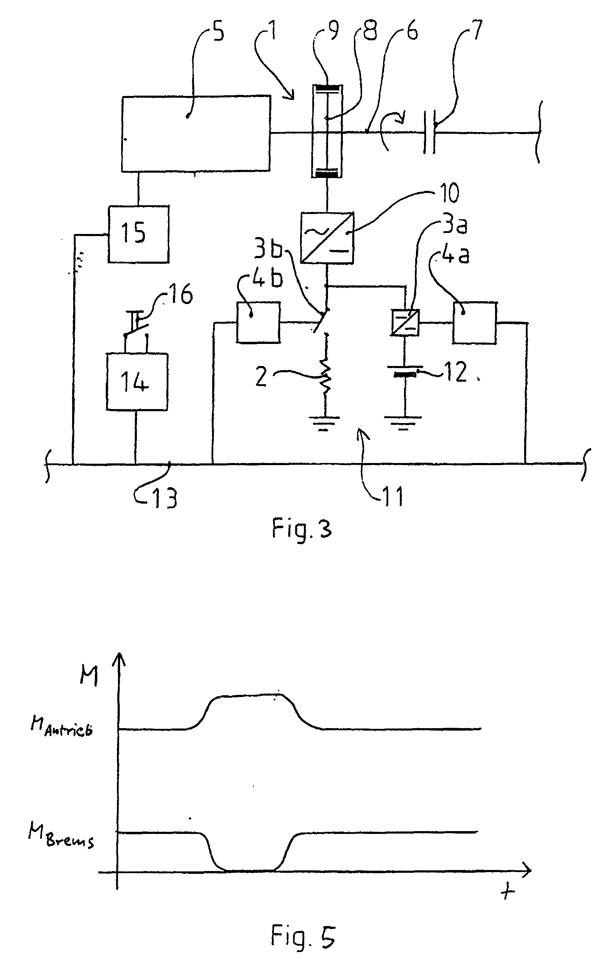

Ein anderes Funktionsprinzip zur Erreichung eines verlangsamten Bremsmomentanstiegs veranschaulichen die Fig. 2a und 2b. Die Zuschaltung des Verbrauchers 2 erfolgt hier schlagartig, jedoch verzögert gegenüber dem (durch Pfeil in Figur 2b gekennzeichneten) Zeitpunkt des Einschaltkommandos. In dem Zeitintervall zwischen Einschaltkommando und schlagartigem Zuschaltzeitpunkt wird die Leistungsaufnahme eines anderen Verbrauchers allmählich um einen Wert erhöht, welcher der (späteren) Leistungsaufnahme des Verbrauchers 2 im wesentlichen entspricht. Synchron mit dem schlagartigen Zuschalten des Verbrauchers 2 wird die erhöhte Leistungsaufnahme des anderen Verbrauchers schlagartig auf den ursprünglichen Wert (der auch null sein kann) zurückgefahren. In Fig. 2a handelt es sich bei dem zusätzlichen Verbraucher 1 um einen Speicher 12 (z.B. Batterie oder Kondensator), der dem Verbraucher 2 parallel geschaltet ist und die in dem Zeitintervall anfallende elektrische Energie für spätere Verwendung speichern kann. Für das Wechselspiel zwischen Speicher 12 und elektrischem Verbraucher 2 sorgen einerseits eine dem Speicher 12 vorgeschaltete Schaltung 3a zur variablen Steuerung des Batterieladestroms und andererseits ein dem Verbraucher 2 vorgeschalteter Schalter 3a zum schlagartigen Zu- und Ausschalten des Verbrauchers 2 mit zugehörigen Controllern 4, deren zeitliche Steuerung und Synchronisierung ein übergeordnetes Steuergerät (Fig. 3) übernimmt. Es erzeugt das in Figur 2b gezeigte allmähliche Ansteigen des Drehmoments, indem nach einem Einschaltkommando (durch Pfeil gekennzeichnet) bei geöffnetem Schalter 3b zunächst den Batterieladestrom durch entsprechendes Ansteuern der Ladestromsteuerschaltung allmählich erhöht wird, bis die Ladeleistung der erwarteten Verbraucherleistung entspricht. Dann veranlaßt das Steuergerät ein abruptes Verringern des Ladestroms auf den ursprünglichen Wert (z.B. den Wert null) und gleichzeitig ein Schließen des Schalters 3b, so daß der Verbraucher 2 schlagartig seine volle Leistung aus dem Generator 1 aufnimmt. Die von der Batterie aufgenommene Energie ist in Fig. 2b durch die schraffierte Fläche veranschaulicht (Hierbei ist eine konstante Drehzahl vorausgesetzt, so daß die in der Figur dargestellte Zeit dem Drehwinkel proportional ist). Insgesamt ergibt sich durch dieses Wechselspiel der dargestellte gleichmäßige verlangsamte Anstieg des Bremsmoments.

Ein Antriebssystem eines Fahrzeugs, z.B. eines Personenkraftwagens, gemäß Fig. 3 weist einen Verbrennungsmotor 5 auf, der Drehmoment über eine Antriebswelle 6 (z.B. die Kurbelwelle des Verbrennungsmotors 5), eine Kupplung 7 und weitere (nicht gezeigte) Teile eines Antriebsstrangs auf die Antriebsräder des Fahrzeugs abgibt. Bei Leerlaufbetrieb ist die Kupplung 7 geöffnet. Auf der Antriebswelle 6 sitzt eine im folgenden als Generator 1 bezeichnete elektrische Maschine, hier eine Asynchron-Drehstrom-Maschine. Sie weist einen direkt auf der Antriebswelle 6 sitzenden und drehfest mit ihr verbundenen Läufer 8 sowie einen z.B. am Gehäuse des Verbrennungsmotors 5 abgestützten Ständer 9 auf. Ein Umrichter 10 kann die (nicht dargestellte) Ständerwicklung mit elektrischen Strömen und Spannungen praktisch frei einstellbarer Amplitude, Phase und Frequenz speisen, um zur Erzeugung einer generatorischen Wirkung ein dem Läufer 8 mit Schlupf nacheilendes und ihn dadurch bremsendes Drehfeld zu erzeugen. Es handelt sich z.B. um einen Gleichspannungs-Zwischenkreis-Wechselrichter, welcher mit Hilfe von elektronischen Schaltern (z.B. Feldeffekttransistoren oder IGBT's) sinusbewertete breitenmodulierte Pulse erzeugt, die - gemittelt durch die Induktivität des Generators 1 - zu nahezu sinusförmigen Strömen der gewünschten Frequenz, Amplitude und Phase im Generator 1 führen. Bei generatorischem Bremsbetrieb arbeitet die Drehstrommaschine so, daß Strom und Spannung einander entgegengerichtet sind. Der Umrichter 10 wirkt dann effektiv als Gleichrichter. Bei anderen (nicht gezeigten) Ausführungsformen mit einem Synchron-Drehstromgenerator kommt statt des Umrichters ein einfacher Gleichrichter zur Anwendung, der mit durch die anliegende Spannung gesteuerten Ventilen (z.B. Dioden) ausgerüstet ist. Die elektrische Maschine 1 kann neben der Generatorfunktion auch eine Motorfunktion ausüben, so kann sie z.B. als Starter für den Verbrennungsmotor 5 dienen. Hierzu wird der Umrichter 10 so gesteuert, daß Strom und Spannung gleichsinnig gerichtet sind.

Der Umrichter 10 speist ein Gleichspannungsbordnetz 11, welches eine Bordnetzbatterie 12 und elektrische Verbraucher umfaßt, von denen hier beispielhaft der elektrische Verbraucher 2 dargestellt ist. Eine Wechselschalteinrichtung entsprechend Figur 2a umfaßt eine mit der Batterie 12 in Reihe geschaltete Batterieladesteuerschaltung 3a sowie einen mit dem Verbraucher 2 in Reihe geschalteten Schalter 3b, die jeweils über einen Controller 4a bzw. 4b mit einem Steuerbus 13 verbunden sind. Ein Bremsmomentsteuergerät 14 gibt auf den Steuerbus 13 Steuersignale für die Controller 4a und 4b.

Für die Steuerung der Controller 4a, 4b sorgt ein Bremsmoment-Steuergerät 14. Dieses gibt Steuersignale auf den Steuerbus 13, welche beispielsweise jeweils aus einem Adressteil zum Ansprechen eines gewünschten Controllers 4a, 4b und einem Befehlsteil zum Veranlassen eines Controllers 4a, 4b und der von ihm gesteuerten Einheit 3a, 3b zu einer bestimmten Aktion (z.B. "Schalter schließen") bestehen. Das Bremsmoment-Steuergerät 14 steht über den Steuerbus 13 mit einer Reihe anderer Geräte in Verbindung, z.B. einem Verbrennungsmotor-Steuergerät 15, einem (nicht gezeigten) Drehzahlmesser, einem (nicht gezeigten) Drosselklappenstellungssensor, etc. Es ist direkt (oder über den Steuerbus 13) mit einem Betätigungsschalter 16 gekoppelt, mit dem eine Bedienungsperson manuell das Kommando zum Ein- und Ausschalten des Verbrauchers 2 geben kann. Selbstverständlich können Ein- und Ausschaltkommandos für den Verbraucher 2 auch automatisch durch das Antriebssystem selbst generiert werden. So kann - wenn es sich bei dem Verbraucher 2 z.B. um eine Zusatzheizung für das Kühlwasser des Verbrennungsmotors handelt - bei einem Unterschreiten einer bestimmten Mindesttemperatur der Verbraucher 2 eingeschaltet, und bei Überschreiten ausgeschaltet werden. Derartiges kann beispielsweise bei Direkteinspritz-Turbodieselmotoren vorteilhaft sein, da diese im Winterbetrieb oft nicht ausreichende Abwärme für eine Aufheizung des Kühlwassers auf Betriebstemperatur aufbringen, und daher einer Zusatzheizung bedürfen. Die Kopplung des Bremsmoment-Steuergeräts 14 mit dem Verbrennungsmotor-Steuergerät 15 dient u.a. dazu, bei einem Einschaltkommando die Verbrennungsmotor-Steuerung über den erwarteten zusätzlichen Drehmomentbedarf zu informieren, um bereits vor einem merklichen Absinken der Leerlaufdrehzahl einen drehmomenterhöhten Füllungseingriff herbeizuführen.

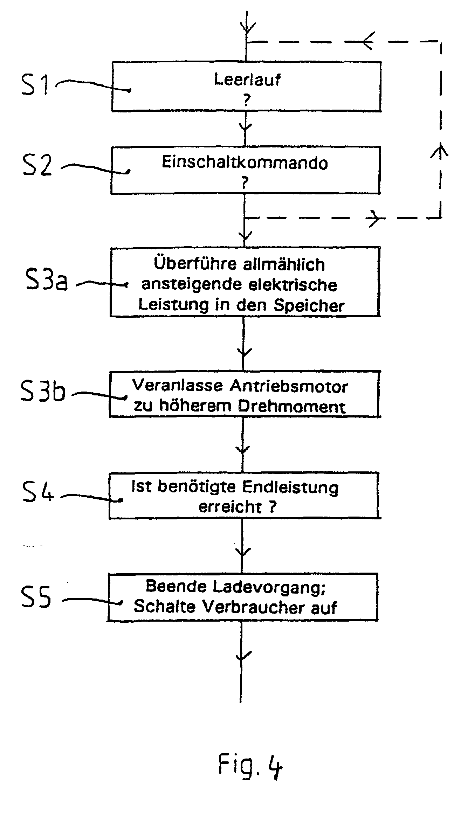

Im folgenden wird die Funktionsweise des Antriebssystems von Fig. 3 anhand Fig. 2 und des Flußdiagramms von Fig. 4 erläutert: Im Schritt S1 wird gefragt, ob das Antriebssystem im Leerlauf arbeitet. Im folgenden Schritt S2 wird gefragt, ob ein Einschaltkommando gegeben wurde, etwa durch Betätigen des Schalters 16. Nur wenn beide Fragen mit "ja" beantwortet wurden, schreitet das Verfahren zum Schritt S3a fort; andernfalls werden die Schritte S1 und S2 wiederholt. Im Schritt S3a steuert das Bremsmoment-Steuergerät 14 den Controller 4a und damit die Batterieladesteuerschaltung 3a so, daß eine allmählich ansteigende elektrische Leistung in den Speicher 12 überführt wird, wodurch entsprechend das Bremsmoment des Generators 1 allmählich ansteigt. Zu diesem Zeitpunkt ist der Schalter 3b noch geöffnet. In dem gleichzeitig ausgeführten Schritt S3b informiert das Bremsmoment-Steuergerät 14 das Verbrennungsmotor-Steuergerät 15 von der bevorstehenden Erhöhung der angeforderten Leistung, so daß letzteres Schritte für eine Drehmomentsteigerung des Verbrennungsmotors 5, z.B. einen Füllungseingriff einleitet.

Im Schritt S4 wird gefragt, ob die Batterieladeleistung bereits der erwarteten Leistung des Verbrauchers 1 entspricht. Falls dies zutrifft, veranlaßt das Bremsmoment-Steuergerät 14 im Schritt S5 eine schlagartige Beendigung des Ladevorgangs und ein dazu simultanes Aufschalten des Verbrauchers 1, und zwar durch entsprechende Umsteuerung der Ladesteuerschaltung durch die Controller 4a und Schließen des Schalters 3b durch den Controller 4b. Aufgrund des verzögerten Anstiegs des Bremsmoments zeigt die Leerlaufdrehzahl praktisch kein Absinken beim Einschalten des Verbrauchers 1. Hierzu trägt die Beaufschaltung der Störgröße "erhöhtes Generatorbremsmoment" auf die Leerlaufregelung bei. Der Grundgedanke besteht also darin, daß der Fahrer des Kraftfahrzeugs elektrische Großverbraucher nicht mehr selbst unmittelbar einschaltet, sondern stattdessen ein Einschaltkommando gibt, mit dem ein Programm zur verzögerten Zuschaltung der vollen Verbraucherleistung startet.

Eine Ausgestaltung gemäß Anspruch 5 ist in Figur 5 veranschaulicht. Und zwar signalisiert das Verbrennungsmotor-Steuergerät 15 dem Bremsmoment-Steuergerät 14, wenn eine hohe Drehmomentanforderung an den Verbrennungsmotor 5 vorliegt. Dies ist z.B. bei einer gewünschten hohen Fahrzeugbeschleunigung der Fall, etwa bei einem Überholmanöver. Das Bremsmoment-Steuergerät 14 veranlaßt dann den Controller 4b dazu, den Verbraucher 2 auszuschalten sowie ggf. den Controller 4a, einen etwaigen Batterieladestrom zu unterbrechen. Dies bedingt - wie in Fig. 5 veranschaulicht ist - eine Verringerung des Bremsmomentes des Generators. Wenn die Drehmomentanforderung an den Verbrennungsmotor 5 wieder abnimmt, können der Verbraucher 2 sowie ggf. der Batterieladevorgang wieder zugeschaltet werden. Sicherheits- oder betriebsrelevante Verbraucher, die unterbrechungsfrei zu betreiben sind, können in Phasen hohen angeforderten Verbrennungsmotordrehmoments aus einem Energiespeicher, z.B. der Fahrzeugbatterie 12, gespeist werden. Um in diesem Fall bei mehreren Verbrauchern eine zu weitgehende Entladung der fahrzeugbatterie 12 auszuschließen, können die Verbraucher 2 in Abhängigkeit vom Ladezustand des Energiespeichers 12 in einer Reihenfolge gemäß vorgegebener Verbraucherprioritäten teilweise oder ganz abgeschaltet werden. Fig. 5 zeigt anschaulich die vorübergehende Abnahme des Generatorbremsmoments bei einer Zunahme des Verbrennungsmotormoments als Funktion der Zeit, sowie die anschließende Rückkehr in den Ausgangszustand bei der folgenden Abnahme des Verbrennungsmotor-Bremsmoments.

## Patentansprüche

1. Antriebssystem, insbesondere eines Kraftfahrzeugs, mit
- einem Antriebsmotor (5), insbesondere einem Verbrennungsmotor;
- mindestens einem mit dem Antriebsmotor (5) gekoppelten Generator (1), welcher der Speisung eines oder mehrerer elektrischer Verbraucher (2) dient;
- einem Steuersystem, welches bei einer Zuschaltung eines oder mehrerer elektrischer Verbraucher (2) bewirkt, daß der Antriebsmotor (5) nur mit einem verlangsamt ansceigenden Bremsmoment des Generators (1) beaufschlagt wird,
**dadurch gekennzeichnet daß**,
der verlangsamte Anstieg des Bremsmoments dadurch erzielt wird, daß das Steuersystem die oder mehrere der zuzuschaltenden Verbraucher (2) zeitlich nacheinander zuschaltet.

2. Antriebssystem, insbesondere eines Kraftfahrzeugs, mit
- einem Antriebsmotor (5), insbesondere einem Verbrennungsmotor;
- mindestens einem mit dem Antriebsmotor (5) gekoppelten Generator (1), welcher der Speisung eines oder mehrerer elektrischer Verbraucher (2) dient;
- einem Steuersystem, welches bei einer Zuschaltung eines oder mehrerer elektrischer Verbraucher (2) bewirkt, daß der Antriebsmotor (5) nur mit einem verlangsamt ansteigenden Bremsmoment des Generators (1) beaufschlagt wird,
**dadurch gekennzeichnet daß**,
der verlangsamte Anstieg des Bremsmoments dadurch erzielt wird, daß der elektrische Verbraucher (2) nach einem Einschaltkommando mit zeitlicher Verzögerung zugeschaltet wird, und der Generator (1) in dem Zeitintervall zwischen Einschaltkommando und Zuschaltung ein langsam ansteigendes Bremsmoment aufbringt, dessen Endwert im wesentlichen dem Bremsmoment nach Zuschaltung entspricht, wobei die in dem Zeitintervall erzeugte elektrische Energie einem Speicher (12) oder einem anderen Verbraucher zugeführt wird.

3. Antriebssystem nach Anspruch 1 oder 2, bei welchem das Steuersystem bei einer Einschaltung eines oder mehrerer Verbraucher außerdem den Antriebsmotor (5) dazu veranlaßt, ein größeres Antriebsmoment zu erzeugen.

4. Antriebssystem nach einem der Ansprüche 1 bis 3, bei welchem die die Zuschaltung des Verbrauchers (2) steuernde Information über ein Bussystem (13) zu dem Verbraucher (2) gelangt.

5. Antriebssystem nach einem der Ansprüche 1 bis 4, bei welchem das Steuersystem bei einem besonderen Leistungsbedarf des Fahrzeugantriebs das Bremsmoment des Generators (1) verringert oder vollständig aufhebt.

6. Antriebssystem nach Anspruch 5, bei welchem die Verringerung des Bremsmoments dadurch bewirkt wird, daß ein oder mehrere Verbraucher (2) abgeschaltet werden.

7. Antriebssystem nach Anspruch 6, bei welchem verschiedene Verbraucher (2) in Abhängigkeit vom Ladezustand des Energiespeichers (12) in einer Reihenfolge gemäß vorgegebener Verbraucherprioritäten teilweise oder ganz abgeschaltet werden.

8. Antriebssystem nach Anspruch 5, bei welchem die Verringerung des Bremsmoments dadurch bewirkt wird, daß ein oder mehrere Verbraucher (2) vorübergehend aus einem Energiespeicher (12) gespeist werden.

## Claims

1. A drive system, especially of a motor vehicle, having
- a drive engine (5), in particular an internal combustion engine;
- at least one generator (1) coupled to the drive engine (5), which serves to supply one or more electrical consumers (2);
- a control system, which upon the additional connection of one or more electrical consumers (2) causes the drive engine (5) to be exposed only to a retarded rising braking torque of the generator (1),
**characterised in that** the retarded rise in the braking torque is achieved **in that** the control system additionally switches on the one or more consumers (2) to be connected in time succession.

2. A drive system, especially of a motor vehicle, having
- a drive engine (5), in particular an internal combustion engine;
- at least one generator (1) coupled to the drive engine (5), which serves to supply one or more electrical consumers (2);
- a control system which causes the drive engine (5) to be exposed only to a retarded rising braking torque of the generator (1) upon the additional connection of one or more electrical consumers (2),
**characterised in that** the retarded rise in the braking torque is achieved **in that** the electrical consumer (2) is additionally switched on with a time delay after a switch-on command, and the generator (1) applies a slowly rising braking torque in the time interval between the switch-on command and additional switching on, whose final value essentially corresponds to the braking torque after switching on, with the electrical energy generated in the time interval being supplied to an accumulator (12) or another consumer.

3. A drive system according to Claim 1 or 2, in which the control system also causes the drive engine (5) to generate a larger driving torque upon the connection of one or more consumers.

4. A drive system according to one of Claims 1 to 3, in which the information controlling the additional connection of the consumer (2) reaches the consumer (2) via a bus system (13).

5. A drive system according to one of Claims 1 to 4, in which the control system reduces or completely eliminates the braking torque of the generator (1) in the event of a special power demand of the vehicle drive.

6. A drive system according to Claim 5, in which the reduction in the braking torque is caused by the fact that one or more consumers (2) are switched off.

7. A drive system according to Claim 6, in which different consumers (2) are partially or completely switched of as a function of the charging state of the energy accumulator (12) in a sequence according to stipulated consumer priorities.

8. A drive system according to Claim 5, in which the reduction in the braking torque is caused by the fact that one or more consumers (2) are temporarily supplied from an energy accumulator (12).

## Revendications

1. Système d'entraînement, en particulier d'un véhicule motorisé, comportant :
- un moteur d'entraînement (5), en particulier un moteur à combustion interne ;
- au moins un générateur (1) qui est accouplé au moteur d'entraînement (5) et sert à alimenter un ou plusieurs récepteurs électriques (2) ;
- un système de commande qui, lors d'une mise en circuit d'un ou de plusieurs récepteurs électriques (2), fait que le moleur d'entraînement (5) n'est contraint que par un couple de freinage du générateur (1) qui croît de façon ralentie,
**caractérisé par le fait**
**que** la croissance ralentie du couple de freinage s'obtient par le moyen que le système de commande met en circuit successivement dans le temps les, ou plusieurs des, récepteurs (2) à mettre en circuit.

2. Système d'entraînement, en particulier d'un véhicule motorisé, comportant :
- un moteur d'entraînement (5), en particulier un moteur à combustion interne ;
- au moins un générateur (1) qui est accouplé au moteur d'entraînement (5) et sert à alimenter un ou plusieurs récepteurs électriques (2) ;
- un système de commande qui, lors d'une mise en circuit d'un ou de plusieurs réceptcurs électriques (2), fait que le moteur d'entraînement (5) n'est contraint que par un couple de freinage du générateur (1) qui croît de façon ralentie,
**caractérisé par le fait**
**que** la croissance ralentie du couple de freinage s'obtient par le moyen que le récepteur électrique (2) est mis en circuit, selon une instruction de mise en circuit, avec un retard dans le temps, et que dans l'intervalle de temps entre l'instruction de mise en circuit et la mise en circuit, le générateur (1) exerce un couple de freinage qui croît lentement et dont la valeur finale correspond essentiellement au couple de freinage après mise en circuit, l'énergie électrique produite dans l'intervalle de temps étant envoyée à un accumulaleur (12) ou à un autre récepteur.

3. Système d'entraînement selon la revendication 1 ou 2, dans le cas duquel, lors d'une mise en circuit d'un ou de plusieurs récepteurs, le système de commande oblige en outre le moteur d'entraînement (5) à produire un couple d'entraînement plus important.

4. Système d'entraînement selon l'une des revendications 1 à 3, dans le cas duquel l'information qui commande la mise en circuit du récepteur (2) parvient au récepteur (2) par l'intermédiaire d'un système de bus (13).

5. Système d'entraînement selon l'une des revendications 1 à 4, dans le cas duquel, en présence d'un besoin de puissance particulier du système d'entraînement du véhicule, le système de commande réduit le couple de freinage du générateur (1) ou l'annule complètement.

6. Système d'entraînement selon la revendication 5, dans le cas duquel la diminution du couple moteur s'opère par le moyen qu'un ou plusieurs récepteurs (2) sont mis hors circuit.

7. Système d'entraînement selon la revendication 6, dans le cas duquel différents récepteurs (2) sont mis hors circuit partiellement ou totalement en fonction de l'état de charge de l'accumulateur d'énergie (12), selon une succession conforme à des priorités prescrites pour les récepteurs.

8. Système d'entraînement selon la revendication 5, dans le cas duquel la diminution du couple de freinage s'opère par le moyen qu'un ou plusieurs récepteurs (2) sont temporairement alimentés à partir d'un accumulateur d'énergie (12).
